(19) Europäisches Patentamt
European Patent Office
Office européen des brevets

(11) EP 0 505 469 B2

(12) NEUE EUROPÄISCHE PATENTSCHRIFT

(45) Veröffentlichungstag und Bekanntmachung des Hinweises auf die Entscheidung über den Einspruch:
**15.05.1996 Patentblatt 1996/20**

(45) Hinweis auf die Patenterteilung:
**22.09.1993 Patentblatt 1993/38**

(21) Anmeldenummer: **91901771.5**

(22) Anmeldetag: **19.12.1990**

(51) Int. Cl.$^6$: **B05D 7/26**, C09D 5/02

(86) Internationale Anmeldenummer:
**PCT/EP90/02256**

(87) Internationale Veröffentlichungsnummer:
**WO 91/09686 (11.07.1991 Gazette 1991/15)**

# (54) VERFAHREN ZUR HERSTELLUNG EINES MEHRSCHICHTIGEN, SCHÜTZENDEN UND/ODER DEKORATIVEN ÜBERZUGS

PROCESS FOR MAKING A MULTI-LAYER PROTECTIVE AND/OR DECORATIVE COATING

PROCEDE DE FABRICATION D'UN REVETEMENT MULTICOUCHE DE PROTECTION ET/OU DE DECORATION

(84) Benannte Vertragsstaaten:
**AT BE CH DE DK ES FR GB IT LI NL SE**

(30) Priorität: **23.12.1989 DE 3942803**

(43) Veröffentlichungstag der Anmeldung:
**30.09.1992 Patentblatt 1992/40**

(73) Patentinhaber: **BASF Lacke + Farben AG**
**D-48165 Münster-Hiltrup (DE)**

(72) Erfinder:
- **KLIER, Konrad**
  **NL-2553 PH Den Haag (NL)**
- **STREITBERGER, Hans-Joachim**
  **Birmingham, MI 48010 (US)**

(74) Vertreter: **Fitzner, Uwe, Dr. et al**
**Dres. Fitzner & Christophersen,**
**Rechts- und Patentanwälte,**
**Kaiserswerther Str. 74**
**D-40878 Ratingen (DE)**

(56) Entgegenhaltungen:
**EP-B- 0 089 497**
**DE-A- 3 630 793**
**US-A- 4 558 090**
**WO-A-88/02010**
**US-A- 4 499 151**

EP 0 505 469 B2

**Beschreibung**

Die Erfindung betrifft ein Verfahren zur Herstellung eines mehrschichtigen, schützenden und/oder dekorativen Überzuges auf einer Substratoberfläche.

Insbesondere bei der Automobillackierung, aber auch in anderen Bereichen, in denen man Überzüge mit guter dekorativer Wirkung und gleichzeitig einen guten Korrosionsschutz wünscht, ist es bekannt, Substrate mit mehreren, übereinander angeordneten Überzugsschichten zu versehen.

Große Bedeutung haben dabei Mehrschichtlackierungen erlangt, bei denen das Substrat zunächst mit einem pigmentierten Basislack beschichtet und anschließend ein Klarlack aufgebracht wird. Bevorzugt wird dabei nach dem sogenannten Naßin-Naß-Verfahren gearbeitet, bei dem der Basislack nach kurzer Ablüftzeit ohne Einbrennschritt mit dem Klarlack überlackiert wird und anschließend Basislack und Klarlack zusammen ausgehärtet werden.

Aus den US-Patentschriften Nr. 4,499,150 und 4,499,151 sind Basislack/Klarlack-Systeme bekannt, bei denen entweder der Basislack, der Klarlack oder sowohl der Basis- als auch der Klarlack Polyadditionsprodukte mit Alkoxi- oder Acryloxisilaneinheiten enthalten. Diese Silangruppen enthaltenden polymeren werden hergestellt durch Copolymerisation von siliciumfreien Monomeren mit mindestens einer Doppelbindung und silangruppenhaltigen ethylenisch ungesättigten Monomeren. Sowohl der Basis- als auch der Klarlack stellen konventionelle, d. h. auf der Basis organischer Lösungsmittel formulierte Lacke dar.

Auch aus der internationalen Patentanmeldung mit der internationalen Veröffentlichungsnummer WO 88/02010 sind Basislack/Klarlack-Systeme bekannt, bei denen entweder der Basislack, der Klarlack oder sowohl der Basis- als auch der Klarlack Polyadditionsprodukte mit Alkoxi- oder Acryloxisilaneinheiten enthalten. Sowohl der Basis- als auch der Klarlack stellen konventionelle Lacke dar. Die so erhaltenen Beschichtungen zeichnen sich insbesondere durch eine sehr gute Benzinbeständigkeit sowie kurze Trocknungszeiten aus. Nachteilig bei diesen Systemen ist jedoch die Lösemittelbelastung der Umgebung beim Trocknen der Lackfilme. Außerdem sollten die Erichsentiefungs- und Gitterschnitt-Werte sowie die Steinschlagbeständigkeit der resultierenden Beschichtungen weiter verbessert werden.

Wirtschaftliche und ökologische Gründe haben außerdem dazu geführt, daß versucht wurde, bei der Herstellung von Mehrschichtlackierungen wässrige Basisbeschichtungszusammensetzungen einzusetzen. Derartige wässrige Basislackbeschichtungszusammensetzungen sind beispielsweise in der DE-OS-35 45 618, der US-PS-4,558,090, der US-PS-4,489,135, der EP-A-89 497 und der DE-OS-37 39 332 beschrieben. Als Decklack werden dabei konventionelle lösemittelhaltige, wasserverdünnbare oder Pulverklarlacke eingesetzt. Typische Klarlacke sind dabei lösemittelhaltige, säurehärtende Klarlacke auf der Basis von Aminoplastharzen und hydroxylgruppenhaltigen Acrylatcopolymererisaten oder hydroxylgruppenhaltigen Polyesterharzen. Derartige Klarlacke erfordern jedoch erhöhte Einbrenntemperaturen und sind deshalb für den Bereich der Autoreparaturlackierung nicht geeignet. Im Bereich der Autoreparaturlackierung werden daher meist Klarlacke auf Basis von hydroxylgruppenhaltigen Acrylaten und blockierten Isocyanaten eingesetzt. Toxikologische und Allergie-Aspekte lenken aber das Interesse auf isocyanatfreie Autoreparaturlacke.

Der vorliegenden Erfindung lag somit die Aufgabe zugrunde, ein Verfahren zur Herstellung eines mehrschichtigen Überzuges zur Verfügung zu stellen, bei dem die Lösemittelbelastung der Umgebung beim Trocknen der Lackfilme möglichst gering ist. Außerdem sollten die resultierenden Beschichtungen insbesondere eine gute Haftung, d.h. gute Erichsen-Tiefung und Gitterschnittwerte sowie eine gute Steinschlagbeständigkeit zeigen. Aber auch die übrigen technischen Eigenschaften wie Glanz, überlackierbarkeit u. ä. sollten auf einem möglichst hohen Niveau liegen, d. h. vergleichbar mit den Eigenschaftswerten sein, die beim Einsatz konventioneller lösemittelhaltiger Basislackbeschichtungszusammensetzungen erzielt werden. Schließlich sollte das in Rede stehende Verfahren auch für den Bereich der Autoreparaturlackierung geeignet sein, d.h. sowohl die in dem Verfahren eingesetzte Basis- als auch die Deckbeschichtungszusammensetzung sollten bei möglichst niedrigen Temperaturen von im allgemeinen unter 100 °C, bevorzugt unter 80 °C, härtbar sein. Selbstverständlich sollte das Verfahren aber auch beispielsweise für die Serienlackierung, d.h. Härtebedingungen von > 100 °C, einsetzbar sein.

Diese Aufgabe wird überraschenderweise durch ein Verfahren zur Herstellung eines mehrschichtigen, schützenden und/oder dekorativen Überzuges auf einer Substratoberfläche gelöst, bei welchem

1.) eine wasserverdünnbare Basislackbeschichtungszusammensetzung aufgebracht wird, die

   a) mindestens ein wasserverdünnbares Bindemittel, ausgewählt aus der Gruppe der wasserverdünnbaren Polyester, Polyurethane, Acrylatcopolymerisate, Aminoplaste, Phenoplaste, Emulsionspolymerisate,
   b) metallische Pigmente sowie ggf. Farbpigmente und ggf. Füllstoffe,
   c) ggf. übliche Hilfs- und Zusatzstoffe sowie
   d) bis zu 20 Gew.-% organische Lösungsmittel enthält,

2.) aus der in Stufe (1) aufgebrachten Zusammensetzung ein Polymerfilm auf der Oberfläche gebildet wird,
3.) auf der so erhaltenen Basisschicht ein transparenter Decklack aufgebracht wird, der ein Silylgruppen enthaltendes polymerisat enthält, wobei das polymerisat erhältlich ist durch Copolymerisation von

$p_1$) 0,1 bis 40 Gew.-% ethylenisch ungesättigten Silanmonomeren der allgemeinen Formel (I)

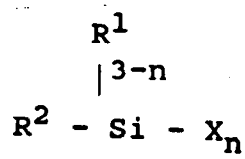

(I)

mit

$R^1$ = Alky, Aryl, Acyl, Aralkyl, mit 1 bis 10 C-Atomen
$R^2$ = organischer Rest mit polymerisierbarer Doppelbindung
X = hydrolisierbare Gruppe
n = 1, 2 oder 3

$p_2$) 5 bis 30 Gew.-%, bevorzugt 8 bis 25 Gew.-%, Monomeren mit mindestens 2 polymerisierbaren ethylenisch ungesättigten Doppelbindungen und
$p_3$) 30 bis 90 Gew.-% ethylenisch ungesättig-ten Monomeren ohne Gruppen mit aktivem Wasserstoff,

wobei die Summe der Gewichtsanteile der Komponenten $p_1$ bis $p_3$ jeweils 100 Gew.-% beträgt,
4.) die Deckschicht zusammen mit der Basisschicht gehärtet wird.

Gegenstand dervorliegenden Erfindung sind außerdem die nach diesem Verfahren beschichteten Gegenstände.

Es ist überraschend und war nicht vorhersehbar, daß die nach dem erfindungsgemäßen Verfahren erhaltenen Beschichtungen eine verbesserte Haftung, d.h. sehr gute Erichsentiefungs- und Gitterschnittwerte sowie gute Steinschlagbeständigkeit aufweisen und daß auch die übrigen technischen Eigenschaften wie z. B. Glanz und Überlackierbarkeit mit den unter Verwendung konventioneller lösemittelhaltiger Basisbeschichtungszusammensetzungen erhältlichen Eigenschaften vergleichbar sind. Vorteilhaft ist es ferner, daß auch bei niedrigen Einbrenntemperaturen der Deck- und Basisschicht gute technische Eigenschaften der Beschichtungen resultieren, so daß das erfindungsgemäße Verfahren auch für den Bereich der Autoreparaturlackierung geeignet ist. Vorteilhaft unter dem toxikologischen Aspekt ist dabei besonders, daß der Klarlack isocyanatfrei ist.

Im folgenden werden nun zunächst die in dem erfindungsgemäßen Verfahren eingesetzte Basisbeschichtungszusammensetzung und der eingesetzte Decklack näher erläutert.
Der in dem erfindungsgemäßen Verfahren eingesetzte Decklack ist bekannt und in der internationalen Patentanmeldung mit der internationalen Veröffentlichungsnummer WO88/02010 beschrieben. Dieserfeuchtigkeitshärtende isocyanatfreie Decklack enthält als Bindemittel ein silylgruppenhaltiges polymerisat, des weiteren organisches Lösungsmittel sowie übliche Hilfs- und Zusatzstoffe und einen Vernetzungskatalysator.
Das silylgruppenhaltige polymerisat ist erhältlich durch Copolymerisation von

$p_1$) 0,1 bis 40 Gew.-% ethylenisch ungesättigte Silanmonomere der allgemeinen Formel (I)

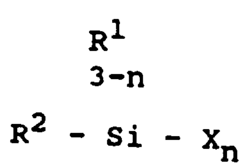

(I)

mit

$R^1$ = Alkyl, Aryl, Acyl, Aralkyl mit 1 bis 10 C-Atomen
$R^2$ = organischer Rest mit polymerisierbarer Doppelbindung
X = hydrolisierbare Gruppe
n = 1, 2 oder 3

$p_2$) 5 bis 30 Gew.-%, bevorzugt 8 bis 25 Gew.-%, Monomeren mit mindestens 2 polymerisierbaren ethylenisch ungesättigten Doppelbindungen und

$p_3$) 30 bis 90 Gew.-% ethylenisch ungesättigten Monomeren ohne Gruppen mit aktivem Wasserstoff, wobei die Summe der Gewichtsanteile der Komponen- ten $p_1$ bis $p_3$ jeweils 100 Gew.-% beträgt.

Beispiele für geeignete Silanmonomere $p_1$ sind folgende Verbindungen

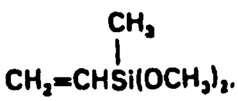

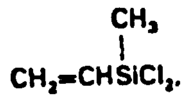

$CH_2{=}CHSi(OCH_3)_3$, $CH_2{=}CHSiCl_3$,

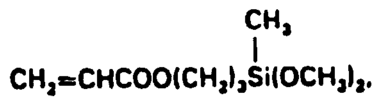

$CH_2{=}CHCOO(CH_2)_3Si(OCH_3)_3$,

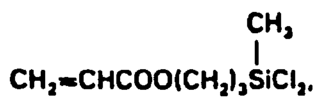

$CH_2{=}CHCOO(CH_2)_3SiCl_3$,

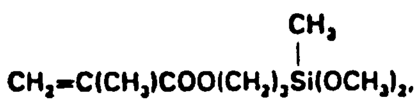

$CH_2{=}C(CH_3)COO(CH_2)_3Si(OCH_3)_3$,

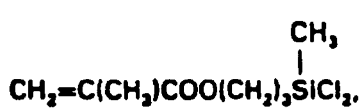

$CH_2=C(CH_3)COO(CH_2)_3SiCl_3$,

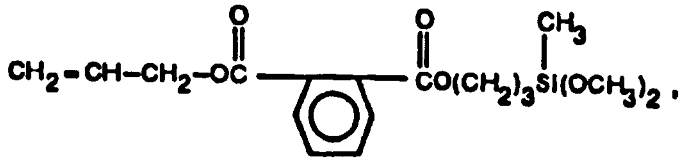

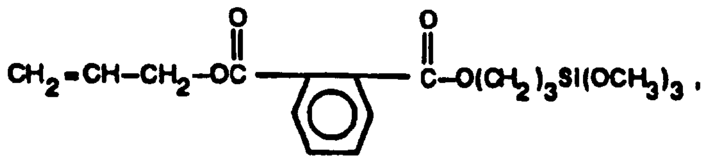

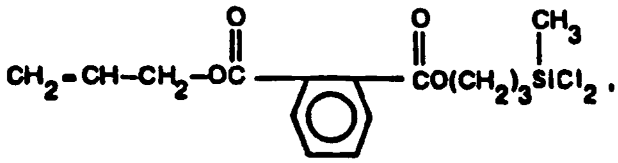

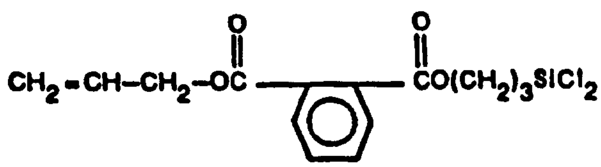

Besonders bevorzugt wird als Komponente $p_1$
$\gamma$ - Methacryloxipropyltrimethoxisilan eingesetzt.

Als Komponente $p_2$ können vorteilhaft Verbindungen der allgemeinen Formel

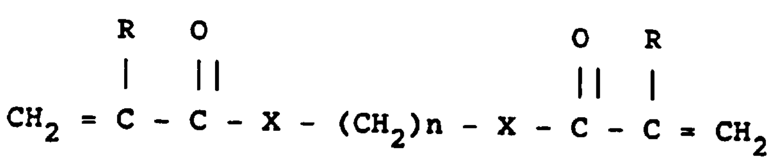

mit

R = H, $CH_3$ oder Alkyl
X = O, NH, S
n = 2 bis 8

verwendet werden. Beispiele für derartige Verbindungen sind Hexandioldiacrylat, Hexandioldimethacrylat, Glykoldiacrylat, Glykoldimethacrylat, Butandioldiacrylat, Butandioldimethacrylat, Trimethylolpropantriacrylat und Trimethylolpropantrimethacrylat. Desweiteren ist auch Divinylbenzol als Komponente $p_2$ geeignet. Selbstverständlich können auch Kombinationen dieser mehrfach ungesättigten Monomeren verwendet werden.

Weiterhin kann die Komponente $p_2$ vorteilhaft eine mit einem ungesättigten, eine polymerisierbare Doppelbindung enthaltenden Alkohol veresterte Polycarbonsäure oder eine mit einem ungesättigten, eine polymerisierbare Doppelbindung enthalten Alkohol veresterte, ungesättigte Monocarbonsäure sein.

Ferner kann vorteilhaft als Komponente $p_2$ ein Umsetzungsprodukt eines Polyisocyanats und eines ungesättigten Alkohols oder eines Amins verwendet werden. Als Beispiel hier für sei das Reaktionsprodukt aus einem Mol Hexamethylendiisicyanat und zwei Mol Allylalkohol oder das Reaktionsprodukt aus Isophorondiisocyanat und Hydroxiethylacrylat genannt.
Eine weitere vorteilhafte Komponente $p_2$ ist ein Diester von Polyethylenglykol und/oder Polypropylenglykol mit einem mittleren Molekulargewicht von weniger als 1500, bevorzugt weniger als 1000, und Acrylsäure und/oder Methacrylsäure.

Als Komponente $p_2$ kommen weiterhin Umsetzungsprodukte aus einer Carbonsäure mit einer polymerisierbaren, olefinisch ungesättigten Doppelbindung und Glycidylacrylat und/oder Glycidylmethacrylat sowie Umsetzungsprodukte von Dicarbonsäuren mit Glycidylacrylat und/oder Glycidylmethacrylat in Frage. Derartige mehrfach ethylenisch ungesättigte Monomere sollten erfindungsgemäß jedoch nur in deinen Anteilen eingesetzt werden, da sie Hydroxylgruppen enthalten, die mit den Silanmonomeren $p_1$ reagieren können. Dies gilt auch für mehrfach ethylenisch ungesättigte Monomere, die aus Diepoxidverbindungen und ethylenisch ungesädigten Monomeren mit einer primären oder sekundären Aminogruppe gebildetwerden, da diese Produkte ebenfalls Hydroxylgruppen enthalten.

Die Auswahl der ethylenisch ungesättigten Neutralmonomere (Komponente $p_3$) ist nichtbesonders kritisch. Diese können ausgewählt sein aus der Gruppe Styrol, Vinyltoluol, Alkylester der Acrylsäure und der Methacrylsäure, Alkoxiethylacrylats und Aryloxiethylacrylate und die entsprechenden Methacrylate sowie Ester der Malein- und Fumarsäure. Beispiele hierfür sind Methylacrylat, Ethylacrylat, Propylacrylat, Butylacrylat, Isopropylacrylat, Isobutylacrylat, Pentylacrylat, Isoamylacrylat, Hexylacrylat, 2-Ethylhexylacrylat, Octylacrylat, 3,5,5-Trimethylherylacrylat, Decylacrylat, Dodecylacrylat, Hexadecylacrylat, Octadecylacrylat, Octadecenylacrylat, Pentylmethacrylat, Isoamylmethacrylat, 3,5,5-Trimethylhexylmethacrylat, Decylmethacrylat, Dodecylmethacrylat, Hexadecylmethacrylat, Octadecylmethacrylat, Butoxiethylacrylat, Butoxiethylmethacrylat, Methylmethacrylat, Ethylmethacrylat, Propylmethacrylat, Isopropylmethacrylat, Butylmethacrylat, Cylclohexylacrylat, Cyclohexylmethacrylat, Acrylnitril, Methacrylnitril, Vinylacetat, Vinylchlorid und Phenoxiethylacrylat. Weitere Monomere können eingesetzt werden, sofern sie nicht zu unerwünschten Eigenschaften des Copolymerisats führen.

Um eine schnellere Wasseraufnahme bei der Vernetzung unter dem Einfluß von Luftfeuchtigkeit zu ermöglichen, ist es besonders vorteilhaft wenn als zusätzliches Comonomer $p_4$ zu den ethylenisch ungesättigten Monomeren $p_1$, $p_2$ und $p_3$ bis zu 10 Gew.-%, bezogen auf die Summe von $p_1$ bis $p_4$, eines ethylenisch ungesättigten Carbonsäureamids verwendet werden.

Geeignete Komponenten $p_4$ sind beispielsweise Acrylsäureamid, Methylacrylsäureamid, Itakonsäurediamid, $\alpha$-Ethylacrylamid, Crotonsäureamid, Fumahsäureamid und Maleinsäurediamid.

Ggf. können bis zu 5 Gew.-% auch ethylenisch ungesättigte Monomere mit einer Hydroxylgruppe, einer Carboxylgruppe oder einer Aminogruppe mit verwendet werden (Komponente $p_5$). Beispiele für Hydroxylgruppen enthaltende ethylenisch ungesättigte Monomere sind Hydroxialkylester der Acrylsäure und/oder Methacrylsäure, z. B. Hydroxiethylacrylat, Hydroxipropylacrylat, Hydroxibutylacrylat, Hydroxiamylacrylat, Hydroxihexylacrylat, Hydroxioctylacrylat und die entsprechenden Methacrylate. Komponente $p_5$ kann auch ein Umsetzungsprodukt aus einem Mol Hydroxiethylacrylat und/oder Hydroxiethylmethacrylat und durchschnittlich 2 Mol $\varepsilon$-Caprolacton sein. Komponente $p_5$ kann auch ein hydroxylgruppenhaltiger Ester der Acrylsäure oder der Metharcylsäure mit einer sekundären Hydroxylgruppe sein, wie beispielsweise 2-Hydroxipropylacrylat, 2 Hydroxibutylacrylat, 3-Hydroxibutylacrylat und die entsprechenden Methacrylate. Als Hydroxylgruppen enthaltendes polymerisierbares Monomer ist auch ein Umsetzungsprodukt aus Acrylsäure und/oder Methacrylsäure mit dem Glycidylester einer Carbonsäure mit einem tertiären -Kohlenstoffatom geeignet Beispiele für ethylenisch ungesättigte Monomere mit einer Carboxylgruppe sind Methacrylsäure und Acrylsäure. Ein geeignetes ethylenisch ungesättigtes Monomer mit einer Aminogruppe ist N-tert.-Butylaminoethylacrylat.

Die radikalische Polymerisation zur Herstellung der silylgruppenhaltigen Polymerisate wird in einem organischen Lösungsmittel bei Temperaturen von 80 - 130 °C, vorzugsweise bei 90 - 120 °C, durchgeführt. Vorteilhafterweise wird die radikalische Polymerisation zur Herstellung des Silylgruppen enthaltenden Polymerisats so durchgeführt, daß eine Lösung des Polymerisats mit einem Festkörper-Gehalt von 40 - 65 Gew.-% resultiert.

Als Lösungsmittel für die radikalische Polymerisation kommen nichtreaktive Lösungsmittel, wie beispielsweise Ester, Ether, Kohlenwasseratoffe, Alkohole und Ketone in Frage.

Die Polymerisationsreaktion wird in Gegenwart eines Initiators und in Gegenwart von mindestens 2 Gew.-%, bevorzugt von mindestens 4 Gew.-%, jeweils bezogen auf das-Gesamtgewicht des Monomeren $p_1$ bis $p_5$, eines Polymerisationsreglers ohne aktive OH-oder NH-Gruppen ausgeführt, wobei bevorzugt Mercaptosilane als Regler verwendet werden. Beispiele für geeignete Regler sind die in der internationalen Patentanmeldung mit der internationalen Veröffentlichungsnummer WO88/02010 beschriebenen Verbindungen.

Es ergibt sich, daß des öfteren nur bestimmte Regler für bestimmte Kombinationen der zu polymerisierenden Monomeren $p_1$ bis $p_5$ geeignet sind.

Werden beispielsweise als Komponente $p_2$ Diacrylate bzw. Dimethacrylate der allgemeinen Formel

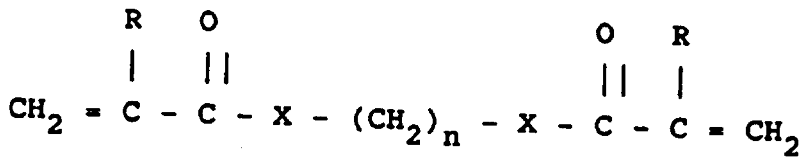

mit

R = H, $CH_3$ oder Alkyl
X = O, NH, S
n = 2 bis 8

in einem Anteil von mehr als 10 Gew.-%, bezogen aufdas Gesamtgewicht aller Monomeren, polymerisiert, sollte die Polymerisation unter Verwendung von mehr als 6 Gew.-%, bezogen auf das Gesamtgewicht der Monomeren, Mercaptoethyltriethoxisilan und/oder Mercaptopropylmethyldimethoxisilan, ggf. zusammen mit anderen Mercaptoverbindungen, in einem Temperaturbereich zwischen 100 °C und 120 °C ausgeführt werden.

Werden die zuvor genannten, mehrfach ethylenisch ungesättigten Acrylat- bzw. Methacrylatverbindungen in einem Anteil von mindestens 15 Gew.-%, bezogen auf das Monomerengewicht, copolymerisiert, sollten als Monomere ohne Gruppen mit aktivem Wasserstoff (Komponente $p_3$) vorwiegend Acrylatmonomere und/oder Methacrylatmonomere und/oder Maleinsäure- und/-oder Fumarsäureester verwendet werden. Die Copolymerisation sollte in Gegenwart von mehr als 6 Gew.-%, bezogen auf das Monomerengewicht, eines Mercaptosilans, bevorzugt Mercaptoethyltriethoxisilan oder Mercaptopropylmethyldimethoxisilan, ggf. zusammen mit anderen Mercaptoverbindungen, ausgeführt werden.

Falls als Komponente $p_2$ mehr als 10 Gew.-% Divinylaromaten, wie beispielsweise Divinylbenzol, zusammen mit den Monomeren $p_1$, $p_3$, ggf. $p_4$ und ggf. $p_5$ copolymerisiert werden, sollten als Regler vorzugsweise mehr als 10 Gew.-%, bezogen auf das Monomerengewicht, Mercaptoethyltriethoxisilan und/- oder Mercaptopropylmethyldimethoxisilan eingesetzt werden, um eine Gelierung des Copolymerisats zu verhindern.

Als Initiatoren kommen vorzugsweise Azoinitiatoren, wie beispielsweise Azobisisobutyronitril in Frage. Bei niedrigem Anteil am eingesetzten mehrfach ethylenisch ungesättigten Monomeren (Komponente $p_2$) können auch Peroxiester als Initiatoren verwendet werden. Als Beispiel hierfür sei tert.-Butylper-oxi-2-ethylhexanoat genannt. Selbstverständlich können auch Azo-Initiatoren mit reaktiven Silicongruppen verwendetwerden. Diese werden in einem Anteil von 0,01 bis 20 Gew.-Teilen pro 100 Gew.-Teile der polymeri- sierbaren Monomeren eingesetzt.

Beispiele für einsetzbare reaktive Silicongruppen enthalten Azoinitiatoren finden sich in EP-A-159 715 und EP-A-159 716.

Die Decklacke enthalten dieses silylgruppenhaltige Polymerisat üblicherweise in Mengen von 20 bis 85 Gew.-%, bevorzugt von 35 bis 70 Gew.-%, jeweils bezogen auf das Gesamtgewicht des Decklackes. Außer 15 bis 80 Gew.-%, bevorzugt 30 bis 65 Gew.-%, bezogen auf das Gesamtgewicht des Decklacks eines oder mehrerer organischer Lösungsmittel enthalten die Decklacke noch auf 100 Gew.-Teile des Polymerisats 0,01 bis 20 Gew.-Teile eines Vernetzungskatalysators, der erst kurz vor der Applikation des Decklackes zugesetzt wird. Geeignete Vernetzungskatalysatoren sind beispielsweise Phosphorsäure, p-Toluolsulfonsäure, Zinndibutyldilaurat, Zinndioctyldilaurat, Amine, beispielsweise aliphatische Diamine, wie Ethylendiamin, Hexandiamin, aliphatische Polyamine, wie Diethylentriamin, Triethylentetramin, Tetaethylenpentamin, alicyclische Amine, wie Piperidin, Piperazin, aromatische Amine, Ethanolamin, Triethylamin, Diazabicyclooctan, Amidine wie Diazabicycloalkene, z. B. Di-azabicyclononen, Diazabicycloundecen und niedermolekulare, basische Siloxane mit mindestens einer hydrolysierbaren Gruppe wie z. B. 3-Aminopropyltriethoxisilan, 3-Aminopropyltrimethoxisilan, 3-Aminopropyl-tris-methoxi-ethoxiethoxisilan, 3-Aminopropylmethyl-diethoxisilan, N-2-Aminoethyl-3-aminopropyltrimethoxisilan, N-2-Aminoethyl-3-aminopropyl-methyldimethoxisilan, N-Methyl-3-aminopropyltrimethoxisilan, 3-Ureidopropyltriethoxisilan und 3,4,5-Dihydroimidazol-1-yl-propyltriethoxisilan; bevorzugt 3,4,5-Dihydroimidazol-1-yl-propyltriethoxisilan, weiterhin Alkali-Katalysatoren, wie beispielsweise Kaliumhydroxid oder Natriumhydroxid. Vorteilhafterweise werden 0,01 bis 10 Gew.-Teile des Katalysators auf 100 Gew.-Teile des polymeren verwendet

Als organische Zinnverbindungen, die als Vernetzungskatalysatoren einsetzbar sind, seien weiterhin Verbindungen mit Zinn-Schwefel-Einfach- oder Doppelbindungen genannt, wie z. B.
$(n\text{-}C_4H_9)_2\ Sn(SCH_2\ COO)$,
$(n\text{-}C_8H_{17})_2\ Sn(SCH_2CH_2COO)$,
$(n\text{-}C_8H_{17})_2\ Sn(SCH_2COO\ CH_2\ CH_2\ OCO\ CH_2S)$,

$(n\text{-}C_8H_{17})_2\,Sn(SCH_2\,COO\,CH_2\,CH_2\,CH_2\,CH_2OCO\,CH_2S)$,
$(n\text{-}C_4H_9)_2\,Sn(SCH_2\,COO\,C_8H_{17}\text{-iso})_2$,
$(n\text{-}C_8H,17)_2\,Sn(SCH_2\,COO\,C_{12}H_{25}\text{-n})_2$,
$(n\text{-}C_4H_9)_2\,Sn(SCH_2COO\,C_8H_{17}\text{-iso})_2$ und
$(n\text{-}C_8H_{17})_2\,Sn = S$.

Es sind auch Mischungen der obengenannten Zinn-Schwefel-Verbindungen mit Zinn-Verbindungen, wie beispielsweise mit Dialkylzinndimaleaten, zur Katalysierung geeignet. Bevorzugt werden Mischungen von zinnorganischen Verbindungen, wie z. B. zinndibutyldilaurat mit den oben genannten niedermolekularen, basischen Siloxanen und/oder thiolgruppenhaltigen Siloxanen, die mindestens eine hydrolysierbare Gruppe enthalten, wie z. B. 3-Mercaptopropyltriethoxisilan, 3-Mercaptopropylmethyl-dimethoxisilan und 3-Mercaptopropyltrimethoxisilan.

Weitere ebenfalls geeignete Katalysatoren finden sich in EP-A-48461 und in EP-A-63753.

Schließlich können die Decklacke ggf. noch bis 8 Gew.-%, bezogen auf das Gesamtgewicht des Decklackes, weitere Hilfsund Zusatzstoffe, wie z. B. Verlaufsmittel, Lichtschutzmittel, enthalten.

Die Herstellung der Decklacke erfolgt nach üblichen Methoden, indem das silylgruppenhaltige polymerisat, organisches Lösungsmittel sowie Hilfs- und Zusatzstoffe durch Mischen und ggf. Dispergieren zu einer Überzugsmasse verarbeitet werden und kurz vor der Anwendung ein Vernetzungskatalysator zugemischt wird.

Aufgrund der niedrigen Härtungstemperaturen sind die beschriebenen Decklacke insbesondere für die Reparaturlackierung von Autokarossen geeignet.

Die in dem erfindungsgemäßen Verfahren eingesetzten wässrigen Basislackbeschichtungszusammensetzungen sind ebenfalls an sich bekannt und beispielsweise in der DE-OS 35 45 618, DE-OS 37 39 332, US-PS-4,558,090, US-PS 4,489,135, EP-A 89497, EP-A 38127, DE-OS 36 28 124,EP-A-158099, DE-OS 29 26 584, US-PS-4,719,132, EPA-A-195931 und DE-OS 33 21 180 beschrieben.

Bevorzugt werden wässrige Basisbeschichtungszusammensetzungen eingesetzt, die als wasserverdünnbares Bindemittel ein Polyurethanharz, ggf. in Kombination mit anderen wasserverdünnbaren Bindemitteln, enthalten. Das wasserverdünnbare Polyurethanharz weist dabei eine Säurezahl von 5 bis 70 mg KOH/g auf und ist herstellbar, indem aus

a) Diolen und/oder Polyolen
b) Diisocyanaten und
c) Verbindungen, die zwei gegenüber NCO-Gruppen reaktive Gruppen enthalten, wobei zumindestein Teil der als Komponente (c) eingesetzten Verbindungen mindestens eine zur Anionenbildung befähigte Gruppe aufweist, die vor oder nach dem Einbau der Komponente c in das Polyurethanmolekül neutralisiert wird, ein endständige Isocyanatgruppen aufweisendes Zwischenprodukt hergestellt wird, dessen freie Isocyanatgruppen anschließend mit einem mindestens drei Hydroxylgruppen enthaltenden Polyol (d), vorzugsweise Triol, oder einem Polyamin und/oder Hydrazin umgesetzt werden.

Die Herstellung des aus den Komponenten a, b und c aufgebauten endständige Isocyanatgruppen aufweisenden Zwischenproduktes und die Umsetzung dieses Zwischenproduktese mit dem Polyol bzw. Polyamin erfolgt nach gut bekannten Verfahren der Polyurethanchemie (vgl. z. B. Kunststoff-Handbuch), Band 7: Polyurethane, herausgegeben von Dr. G. Oertel, Carl Hanser Verlag München-Wien 1983). Die Umsetzungen werden bevorzugt bei Temperaturen bis zu 150 °C, besonders bevorzugt zwischen 50 und 130 °C, bevorzugt in Lösungsmitteln durchgeführt, die gegenüber Isocyanatgruppen inert und mit Wasser mischbar sind. Besonders gut geeignete Lösungsmittel sind Aceton und Methylethylketon. Die Neutralisation der zur Anionenbildung befähigten Gruppen kann vor, während oder nach der Synthese des Polyurethanharzes erfolgen. Die Mengen der einzelnen Komponenten werden so gewählt, daß das Äquivalentverhältnis von NCO- zu OH-Gruppen bzw. anderen reaktiven Gruppen zwischen 1,5 : 1,0 und 1,0 : 1,0, bevorzugt werden 1,4 und 1,2 zu 1,0, liegt. Als Komponente a können prinzipiell alle bei der Herstellung von Bindemitteln auf Polyurethanbasis gebräuchlichen Diole und/oder Polyole eingesetzt werden.

Um die Härte des Polyurethans zu erhöhen, kann man niedrigmolekulare Polyole einsetzen. Sie haben ein Molekulargewicht von 60 bis zu etwa 400 und können aliphatische, alicyclische oder aromatische Gruppen enthalten. Es werden dabei Mengen bis zu 30 Gew.-% der gesamten Polyol-Bestandteile, bevorzugt etwa 2 bis 20 Gew.-%, eingesetzt. Vorteilhaft sind die niedermolekularen Polyole mit bis zu etwa 20 Kohlenstoffatomen je Molekül, wie Ethylenglykol, Diethylenglykol, Triethylenglykol, 1,2-Propandiol, 1,3-Propandiol, 1,4-Butandiol, 1,2-Butylenglykol, 1,6-Hexandiol, Trimethylolopropan, Rizinusöl oder hydriertes Rizinusöl, Di-trimethylolpropanether, Pentaerythrit, 1,2-Cyclohexandiol, 1,4-Cyclohexandimethanol, Bisphenol A, Bisphenol F, Neopentylglykol, Hydroxipivalinsäure-neopentylglykolester, hydroxiethyliertes oder hydroxipropyliertes Bisphenol A, hydriertes Bisphenol A und deren Mischungen.

Um ein NCO-Präpolymeres hoher Flexibilität zu erhalten, sollte ein hoher Anteil eines überwiegend linearen Polyols mit einer bevorzugten Hydroxylzahl von 30 bis 150 mg KOH/g zugesetzt werden. Bis zu 97 Gew.-% des gesamten Polyols können aus gesättigten und ungesättigten Polyestern und/oder Polyethern mit einer Molmasse Mn von 400 bis 5000 bestehen. Als hochmolekulare Polyole sind geeignet aliphatische Polyetherdiole der allgemeinen Formel
$H\text{-}(\text{-}O\text{-}(\text{-}CHR)_n\text{-})_m\text{-}OH$ in der R = Wasserstoff oder ein niedriger, gegebenenfalls mit verschiedenen Substituenten versehener Alkylrest ist, wobei n = 2 bis 6, bevorzugt 3 bis 4 und m = 2 bis 100, bevorzugt 5 bis 50, ist. Beispiele sind lineare oder verzweigte Polyetherdiole, wie Poly(oxiethylen)glykole, Poly(oxipropylen)glykole und/oder Poly(oxibutylen)glykole. Die ausgewählten polyetherdiole sollen keine übermäßigen Mengen an Ethergruppen einbringen, weil sonst die gebildeten Polymere in Wasser anquellen. Die bevorzugten Polyetherdiole sind Poly(oxipropylen)glykole im Molmassenbereich Mn von 400 bis 3000. Polyesterdiole werden durch Veresterung von organischen Dicarbonsäuren oder ihren-Anhydriden mit organischen Diolen hergestellt oder leiten sich von einer Hydroxicarbonsäure oder einem Lacton ab. Um verzweigte Polyesterpolyole herzustellen, können in geringem Umfang Polyole oder Polycarbonsäuren mit einer höheren Wertigkeit eingesetzt werden. Die Dicarbonsäuren und Diole können lineare oder verzweigte aliphatische, cycloaliphatische oder aromatische Dicarbonsäuren oder Diole sein.
Die zur Herstellung der Polyester verwendeten Diole bestehen beispielsweise aus Alkylenglykolen, wie Ethylenglykol, Propylenglykol, Butylenglykol, Butandiol-1,4, Hexandiol-1,6, Neopentylglykol und anderen Diolen, wie Dimethylcyclohexan. Die Säurekomponente des Polyesters besteht in erster Linie aus niedermolekularen Dicarbonsäuren oder ihren Anhydriden mit 2 bis 30, bevorzugt 4 bis 18 Kohlenstoffatomen im Molekül. Geeignete Säuren sind beispielsweise o-Phthalsäure, Isophthalsäure, Terephthalsäure, Tetrahydrophthalsäure, Cyclohexandicarbonsäure, Bernsteinsäure, Adipinsäure, Azelainsäure, Sebazinsäure, Maleinsäure, Fumarsäure, Glutamäure, Hexachlorheptandicarbonsäure, Tetrachlorphthalsäure und/oder dimerisierte Fettsäuren. Anstelle dieser Säuren können auch ihre Anhydride, soweit diese existieren, verwendet werden. Bei der Bildung von Polyesterpolyolen können auch kleinere Mengen an Carbonsäuren mit 3 oder mehr Carboxylgruppen, beispielsweise Trimellithsäureanhydrid oder das Addukt von Maleinsäureanhydrid oder das Addukt von Maleinsäureanhydrid an ungesättigten Fettsäuren anwesend sein.

Die als Komponente a verwendbaren Polyesterpolyole können nach allgemein bekannten Methoden durch Veresterung von organischen Dicarbonsäuren oder ihrer Anhydride mit organischen Diolen hergestellt werden. Dabei können auch Säure- und/oder Hydroxylkomponenten mit ver wendet werden, deren Funktionalität größer als 2 ist.

Es können Polyesterdiole, die sich von Lactonen ableiten, als Komponente a verwendet werden. Diese Produkte erhält man beispielsweise durch Umsetzung von ε-Caprolacton mit einem Diol. Solche Produkte sind in der US-PS 3,169,945 beschrieben.

Ganz besonders bevorzugte Polyurethanharzbindemittel werden erhalten, wenn als Komponente a Polyesterpolyole eingesetzt werden, deren Säurekomponente zumindest zum Teil aus dimeren Fettsäuren besteht. Solche Bindemittel sind in der US-PS 4,423,179 beschrieben.

Als Komponente b können für die Herstellung der Polyurethandispersion beliebige organische Diisocyanate eingesetzt werden. Beispiele von geeigneten Diisocyanaten sind Trimethylendiisocyanat, Tetramethylendiisocyanat, Pentamethylendiisocyanat, Hexamethylendiisocyanat, Propylendiisocyanat, Ethylethylendiisocyanat, 2,3-Dimethylethylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylendiisocyanat, 2,6-Toluylendiisocyanat, 4,4'-Bisphenylendiisocyanat, 1,5-Naphthylendiisocyanat, 1,4-Naphthylendiisocyanat, 1-Isocyanatomethyl-5-isocyanato1,3,3-trimethylcyclohexan, Bis-(4-isocyanatocyclohexyl)- methan, Bis-(4-isocyanatophenyl)-methan, 4,4'-Diisocyanatodiphenylether und 2,3-Bis-(8-isocyanatooctyl)-4-octyl-5-hexyl-cyclohexan.
Die als Komponente c eingesetzten Verbindungen enthalten als mit Isocyanatgruppen reagierende Gruppen vorzugsweise Hydroxylgruppen. Es können auch aminogruppenhaltige Verbindungen eingesetzt werden. Solche Verbindungen können aber einen negativen Einfluß auf die Applikationseigenschaften der Beschichtungszusammensetzungen haben. Art und Menge von ggf. einzusetzenden aminogruppenhaltigen Verbindungen sind vom Durchschnittsfachmann durch einfach durchzuführende Routineuntersuchungen zu ermitteln.

Als zur Anionenbildung befähigte Gruppen kommen vor allem Carboxyl- und Sulphonsäuregruppen in Betracht.

Als Beispiele für Verbindungen, die mindestens zwei mit Isocyanatgruppen reagierende Gruppen und mindestens eine zur Anionenbildung befähigte Gruppe enthalten, seien Dihydroxipropionsäure, Dimethylolpropionsäure, Dihydroxibernsteinsäure oder Dihydroxibenzosäure genannt.

Zur Neutralisation deranionischen Gruppen werden vorzugsweise tertiäre Amine verwendet, die keine mit Isocyanatgruppen reagierenden Gruppen aufweisen. Beispiele sind Trimethylamin, Triethylamin, Dimethylanilin, N-Ethylmorpholin, Diethylanilin, Triphenylamin und dergleichen.
Als Verbindungen, die zwei gegenüber Isocyanatgruppen reaktive Gruppen aufweisen, jeoch frei von zur Anionenbildung befähigten Gruppen sind, können beispielsweise niedermolekulare Diole oder Diamine mit primären oder sekundären Aminogruppen eingesetzt werden.

Die Umsetzung des aus a, b und c gebildeten isocyanatgruppenhaltigen Zwischenproduktes mit einem mindestens drei Hydroxylgruppen enthaltenden Polyol a wird vorzugsweise durch die Stöchiometrie der eingesetzten Verbindungen so gesteuert, daß es zu Kettenverlängerungen und ggf. auch zu Verzweigungen der Bindemittelmoleküle kommt. Bei dieser Umsetzung muß sorgfältig daraufgeachtetwerden, daß keine vernetzten Produkte erhalten werden (vgl. z. B. US-PS-4,423,179).

Als Beispiele für mindestens drei Hydroxylgruppen enthaltende Polyole d seien Trimethylolpropan, Glycerin, Erythrit, Mesoerythrit, Arabit, Adonit usw. genannt. Bevorzugt wird Trimethylolpropan eingesetzt.

Das aus den Komponenten a, b, c und d erhaltene Produkt kann nach Neutralisierung der zur Anionenbildung befähigten Gruppen in eine wässrige Phase überführt werden. Die so erhaltene Bindemitteldispersion kann dann in die erfindungsgemäß verwendeten, wasserverdünnbaren Basisbeschichtungszusammensetzungen inkorporiert werden.

Ganz besonders bevorzugte wasserverdünnbare Basisbeschichtungszusammensetzungen werden erhalten, wenn die in der US-PS 4,423,179 offenbarten wasserverdünnbaren Polyurethane als Bindemittel eingesetzt werden.

In vielen Fällen ist es wünschenswert, die Eigenschaften der erhaltenen Überzüge durch Mitverwendung weiterer Bindemittelsysteme gezielt zu verbessern.

Die erfindungsgemäß eingesetzten, Polyurethanharze enthaltenden, Basisbeschichtungszusammensetzungen enthalten vorteilhafterweise als zusätzliche Bindemittelkomponente ein wasserverdünnbares Melaminharz in einem Anteil von 1 bis 89 Gew.-%, bevorzugt 30 bis 70 Gew.-%, bezogen auf den Anteil des wasserverdünnbaren Polyurethanharzes.

Wasserverdünnbare Melaminharze sind an sich bekannt und werden in größerem Umfang eingesetzt. Es handelt sich hierbei im allgemeinen um veretherte Melaminformaldehyd-Kondensationsprodukte. Ihre Wasserlöslichkeit hängt - abgesehen vom Kondensationsgrad, der möglichst niedrig sein soll, - von der Veretherungskomponente ab, wobei nur die niedrigsten Glieder der Alkanol- bzw. Ethylenglykolmonoetherreihe wasserlösliche Kondensate ergeben. Die größte Bedeutung haben die mit Methanol veretherten Melaminharze. Bei Verwendung von Lösungsvermittlern können auch butanolveretherte Melaminharze in wässriger Phase dispergiert werden.

Es besteht auch die Möglichkeit, Carboxylgruppen in das Kondensat einzufügen. Umetherungsprodukte hochveretherter Formaldehydkondensate mit Oxycarbonsäuren sind über ihre Carboxylgruppe nach Neutralisation wasserlöslich und können in den erfindungsgemäß eingesetzten Basisbeschichtungszusammensetzungen enthalten sein.

Anstelle derbeschriebenen Melaminharze können auch andere wasserlösliche oder wasserdispergierbare Aminoharze wie z.B. Harnstoffharze eingesetzt werden.

Wenn die Basisbeschichtungszusammensetzung ein Melaminharz enthält, kann sie vorteilhafterweise zusätzlich als weitere Bindemittelkomponente ein wasserverdünnbares Polyesterharz und/oder ein wasserverdünnbares Polyacrylatharz enthalten, wobei das Gewichtaverhältnis Melaminharz zu Polyester-/ Polyacrylatharz 2:1 bis 1:4 beträgt und das Gewichtsverhältnis Melaminharz plus Polyester und/oder Polyacrylatharz zu Polyurethanharz 4:1 bis 1:4, bevorzugt 2:1 bis 1:2, besonders bevorzugt 1,3:1 bis 1:1,3, beträgt.

Als wasserverdünnbare Polyesterharze werden vorzugsweise Hydroxylgruppen tragende Polyesterharze eingesetzt. Die erfindungsgemäß eingesetzten Polyesterharze enthalten als solubilisierende Gruppen vorzugsweise Carboxylatgruppen.

Wasserverdünnbare Polyesterharze der oben beschriebenen Art sind an sich bekannt und können durch Umsetzung von mehrwertigen Polyolen mit Polycarbonsäuren bzw. Polycarbonsäureanhydriden hergestellt werden.

Bevorzugt werden Polyesterharze mit einer mittleren Funktionalität pro Molekül von 2,5 bis 10 und mit er nem mittleren Kondensationsgrad pro Molekül von 10 bis 25 eingesetzt. Der Kondensationsgrad gibt die Sunme der Monomerbausteine in der Kette des Polymermoleküls an.

Die eingesetzten Polyesterharze weisen bevorzugt eine Säurezahl von höchstens 30 und eine Hydroxylzahl von höchstens 150 auf.

Für die Synthese der Polyesterharze bevorzugte Säurekomponenten sind aliphatische, cycloaliphatische gesättigte oder ungesättigte und/oder aromatische mehrbasische Carbonsäuren, vorzugsweise Di-, Tri- und Tetracarbonsäuren, mit 2 bis 14, vorzugsweise 4 bis 12 C-Atomen pro Molekül oder deren veresterungsfähige Derivate (z.B. Anhydride oder Ester), z.B. Phthalsäureanhydrid, Isophthalsäure, Terephthalsäure, Tetrahydro- und Hexahydrophthalsäureanhydrid, Endomethylentetrahydrophthalsäure, Bernsteinsäure, Glutarsäure, Sebacinsäure, Azelainsäure, Trimellithsäure und Trimellithsäureanhydrid, Pyromellithsäureanhydrid, Fumarsäure und Maleinsäure. Phthalsäureanhydrid ist die gebräuchlichste Säurekomponente. Die Polyesterharze sollen nicht mehr als 20 Mol-%, bezogen aufdie einkondensierten Polycarbonsäurereste, Fumar- und Maleinsäurereste enthalten.

Für die Synthese der Polyester bevorzugte Polyole sind aliphatische, cycloaliphatische und/oder araliphatische Alkohole mit 1 bis 15, vorzugsweise 2 bis 6 C-Atomen, und 1 bis 6, vorzugsweise 1 bis 4, an nicht-aromatische C-Atome gebundene OH-Gruppen pro Molekül, z.B. Glykole wie Ethylenglykol, Propandiol-1,2 und -1,3, Butandiol-1,2, -1,3 und -1,4, 2-Ethylpropandiol-1,3, 2-Ethylhexandiol-1,3, Neopentylglykol, 2,2-Trimethylpentandiol-1,3, Hexandiol-1,6, Cyclohexandiol-1,2 und -1,4, 1,2- und 1,4-Bis-(hydroxymethyl-)cyclohexan, Adipinsäure-bis-(ethylenglykolester); Etheralkohole wie Di- und Triethylenglykol, Dipropylenglykol; Dimethylolpropionsäure, oxalkylierte Bisphenole mit zwei $C_2$-$C_3$-Oxalkylgruppen pro Molekül, perhydrierte Bisphenole; Butantriol-1,2,4, Hexantriol-1,2,6, Trimethylolethan, Trimethylolpropan, Trimethylolhexan, Glycerin, Pentaerythrit, Dipentaerythrit, Mannit und Sorbit; kettenabbrechende einwertige Alkohole mit 1 bis 8 Kohlenstoffatomen wie Propanol, Butanol, Cyclohexanol und Benzylalkohol, Hydroxypivalinsäure. Die gebräuchlichsten Alkohole sind Glycerin, Trimethylolpropan, Neopentylglykol und Pentaerythrit.

Die erfindungsgemäß einsetzbaren Polyesterharze können auch mit Monocarbonsäure und Monoalkoholen modifiziert sein.

Als Beispiele für Monocarbonsäuren werden Benzoesäure, p-tert.-Butylbenzoesäure, Hexahydrobenzoesäure und Abietinsäure genannt.

Als Beispiele für Monoalkohole werden Methanol, Propanol, Cyclohexanol, 2-Ethylhexanol und Benzylalkohol genannt

Es ist auch möglich, bis zu 25 % der Esterbindungen durch Urethanbindungen zu ersetzen.

Bevorzugte Polyacrylatharze erhält man durch Copolymerisation von Vinyl- bzw. Vinylidenmonomeren, wie z.B. Styrol, $\alpha$-Methylstyrol, o- bzw. p-Chlorstyrol, o-, m- oder p-Methylstyrol, p-tert.-Butylstyrol, (Meth-)Acrylsäure, (Meth-)Acrylnitril, Acryl- und Methacrylsäurealkylester mit 1 bis 8 C-Atomen in der Alkoholkonponente, beispielsweise Ethylacrylat, Methylacrylat, n- bzw. iso-Propylacrylat, n-Butylacrylat, 2-Ethylhexylacrylat, 2-Ethylhexylmethacrylat, Isooctylacrylat, tert.-Butylacrylat, Methylmethacrylat, Ethylmethacrylat, n- bzw. iso-Propylmethacrylat, Butylmethacrylat, Isooctylmethacrylat und ggf. Mischungen derselben; Hydroxyalkyl(meth)acrylate mit 2 bis 4 C-Atomen in der Alkylgruppe, z.B. 2-Hydroxyethyl(meth-)acrylat, 2-Hydroxypropyl(meth-)acrylat, 4-Hydroxybutyl(meth-)acrylat; Trimethylolpropanmono(meth-)acrylat, Pentaerythrit-mono (meth-)acrylat und deren Ester mit Fettsäuren, Diester der Fumarsäure, Itaconsäure, Maleinsäure mit 4 bis 8 Kohlenstoffatomen in der Alkoholkomponente; Acrylnitril, (Meth)acrylsäureamid, Vinylester von Alkanmonocarbonsäuren mit 2 bis 5 Kohlenstoffatomen wie Vinylacetat oder Vinylpropionat oder Mischungen der genannten Monomeren, N-Methoximethyl(meth)acrylsäureamid.

Bevorzugte Monomere sind Styrol und (Meth)Acrylsäurealkylester mit 1 bis 8 C-Atomen in der Alkoholkomponente, das Veresterungsprodukt aus Fettsäure und Hydroxyalkylacrylaten und deren Mischungen.

Als wasserverdünnbare Polyether werden bevorzugt lineare oder verzweigte hydroxylgruppenhaltige Polyether eingesetzt. Als Beispiele seien Poly(oxipropylen)glykole mit einem mittleren Molekulargewicht von 400 bis 1000, bevorzugt von 600 bis 900, genannt.

Als Vernetzungsmittel können blockierte Polyisocyanate eingesetzt werden.

Die in dem erfindungsgemäßen Verfahren eingesetzten Basisbeschichtungszusammensetzungen enthalten 5 bis 30 Gew.-%, bevorzugt 10 bis 25 Gew.-%, wasserverdünnbare Bindemittelbestandteile.

Pigmente

Die erfindungsgemäß eingesetzten Basisbeschichtungszusammensetzungen enthalten metallische Pigmente, bevorzugt Aluminiumplättchenpigmente, die auch wie in der DE-OS 36 36 183 beschrieben, vorbehandelt sein können.

Die Aluminiumplättchenpigmente können auch zusammen mit Farbpigmenten eingesetzt werden. In diesem Fall wird Art und Menge der Farbpigmente so gewählt, daß der erwünschte Metalleffekt nicht unterdrückt wird.

Es können auch mit Metalloxiden beschichtete Glimmerplättchen (z. B. Mica) als Effektpigmente in Kombination mit Aluminiumplättchenpigmenten eingesetzt werden.

Der Pigmentgehalt der erfindungsgemäß eingesetzten Basisbeschichtungszusammensetzungen beträgt - bezogen auf den Gesamtbindemittelfestkörper- im allgemeinen bis zu 25 Gew.-%, vorzugsweise 12 bis 18 Gew.-%.

Hilfs- und Zusatzstoffe

Die erfindungsgemäß eingesetzten Basisbeschichtungszusammensetzungen enthalten üblicherweise 2 bis 10 Gew.-%, bezogen aufden Gesamtfestkörper, eines oder mehrerer Verdickungsmittel.

Als Verdickungsmittel werden dabei oft Schichtsilikate, vorallem Natrium-Magnesiurn-Silikatverbindungen vom Typ Montmorillonit eingesetzt (vgl. z. B. H. Kittel, Lehrbuch der Beschichtungen, Band II, Seite 340 und Band III, Seiten 272 - 274; Verlag W. A. Colomb 1974, 1976). Weiterhin wirken als Verdickungsmittel auch wasserlösliche Celluloseether wie Hydroxiethylcellulose, Methylcellulose, Carboximethylcellulose sowie synthetische polymere mit ionischen und/oder assoziativ wirkende Gruppen, wie Polyvinylalkohol, Poly(meth)acrylamid, Poly(meth)acrylsäure, Polyvinylpyrrolidon, Styrol-Maleinsäureanhydrid - oder Ethylen-Maleinsäureanhydrid-Copolymere und ihre Derivate oderauch hydrophob modifizierte ethoxilierte Urethane oder Polyacrylate. Ebenso können auch Polymermikroteilchen eingesetzt werden, wie dies z. B. in der EP-A-38127 offenbart ist.

Die erfindungsgemäßen Basisbeschichtungszusammensetzungen können auch weitere übliche Zusätze wie Füllstoffe, Hilfsstoffe, Weichmacher, Stabilisatoren, Netzmittel, Dispergierhilfsmittel, Verlaufsmittel, Entschäumer und Katalysatoren einzeln oder im Gemisch in den üblichen Mengen, bevorzugt 0 bis 25 Gew.-%, bezogen auf das Gesamtgewicht der Basisbeschichtungszusammensetzung, enthalten.

Geeignete Füllstoffe sind z. B. Talkum, Glimmer, Kaolin, Kreide, Quarzmehl, Asbestmehl, Schiefermehl, Bariumsulfat, verschiedene Kieselsäuren, Silikate, Glasfasern, organische Fasern und dergleichen.

Die Herstellung der Basisbeschichtungszusammensetzungen wird folgendermaßen durchgeführt: Enthält die Basisbeschichtungszusammensetzung als wasserverdünnbares Bindemittel ein wasserverdünnbares Polyurethanharz, so wird zunächst aus den obengenannten Komponenten a, b, c und d eine feinteilige wässrige Polyurethandispersion hergestellt. Die Umsetzung der Komponenten miteinandererfolgt nach den gut bekannten Verfahren derorganischen Chemie (s.o.). Hierbei werden zunächst das Polyether- oder Polyesterdiol, das Diisocyanat und die gegenüber Isocyanatgruppen bifunktionellen Komponenten c in organischen Lösemitteln miteinander umgesetzt, nachdem zuvor die zur Anionenbildung befähigten Gruppen der Komponente c mit er nem tertiären Amin neutralisiert worden sind. Bei der

Umsetzung können zunächst die Komponenten a und b miteinanderzur Reaktion gebracht und danach die weitere Umsetzung mit c durchgeführtwerden, oder es können die genannten Komponenten gleichzeitig eingesetzt werden. Hierauf wird das erhaltene Produkt in eine zumindest überwiegend wässrige Phase überführt und die Reaktion der noch vorhandenen Isocyanatgruppen mit einem mindestens drei Hydroxylgruppen enthaltenden Polyol d, vorzugsweise Triol oder Amin, durchgeführt. Danach wird der pH-Wert der resultierenden Polyurethandispersion auf einen Wert zwischen 6 und 9 eingestellt.

Bei Verwendung anderer, wasserverdünnbarer Bindemittel für die Basisbeschichtungszusammensetzung wird ebenfalls zunächst eine wässrige Dispersion des jeweiligen Harzes hergestellt.

In diese Bindemitteldispersion werden nun die übrigen Bestandteile, wie z. B. zusätzliche Bindemittel, Aluminiumplättchenpigmente, ggf. Farbpigmente, organische Lösungsmittel, Verdickungsmittel und andere Hilfsstoffe durch Dispergieren beispielsweise mittels eines Rührers oder Dissolvers homogen eingearbeitet. Abschließend wird erneut der pH-Wert kontrolliert und ggf. auf einen Wert von 6 bis 9, vorzugsweise 7,0 bis 8,5, durch Zugabe eines Amins, wie z. B. Triethylamin, Dimethylethanolamin und N-Ethylmorpholin, eingestellt. Weiterhin werden der Festkörpergehalt und die Viskosität auf den jeweiligen Applikationsbedingungen angepaßte Werte eingestellt. Die gebrauchsfertigen Überzugsmittel weisen in der Regel einen Festkörpergehalt von 10 bis 30 Gew.-% auf. Ihr Anteil an Wasser beträgt 60 bis 90 Gew.-%, der an organischen Lösungsmitteln 0 bis 20 Gew.-%, jeweils bezogen auf das gesamte Überzugsmittel.

Nach Applikation der Basisbeschichtungszusammensetzung wird, bevorzugt nach einer kurzen Ablüftzeit ohne Brennschritt, mit der oben beschriebenen transparenten Deckschichtzusammensetzung überlackiert. Anschließend wird die Basisschicht zusammen mit der Deckschicht eingebrannt (naß-in-naß-Verfahren). Diese Aushärtung der Basis- und der Deckschicht erfolgt üblicherweise bei einer Temperatur unterhalb von 100 °C, bevorzugt unterhalb von 80 °C, im Falle der Autoreparaturlackierung. Ansonsten erfolgt die Aushärtung üblicherweise bei einer Temperatur zwischen 100 und 150 °C und einer Zeit zwischen 15 und 30 min. Als zu beschichtende Substrate kommen vorallem vorbehandelte Metallsubstrate in Frage; es können aber auch nicht vorbehandelte Metalle und beliebige andere Substrate, wie z. B. Holz, Kunststoffe usw. mit der Basecoat/Clearcoat-Beschichtung überzogen werden. Die Trockenfilmschichtdicken der resultierenden Basisschicht liegen im allgemeinen zwischen 8 und 20 µm, die der Deckschicht üblicherweise zwischen 20 und 60 µm.

Die Erfindung wird in den folgenden Beispielen näher erläutert. Alle Angaben über Teile und Prozentsätze sind Gewichtsangaben, falls nicht ausdrücklich etwas anderes festgestellt wird.

1. Herstellung eines silylgruppenhaltigen Copolymerisates

In den folgenden Beispielen wurden die Festkörperwerte in einem Umluftofen nach 2 Stunden bei 100 °C bestimmt. Die Viskositäten wurden aufeinem Kegel-platte-Viskosimeter (ICI-Viskosimeter) bei 23 °C bestimmt.

Die Anteile der einzelnen Monomeren, Lösemittelmengen, Initiator- und Reglermengen sowie Polymerisationstemperatur und Bindemitteldaten sind aus der Tabelle 1 ersichtlich. Die Herstellung der Acrylate erfolgte in Standardapparaten (2 Liter Glasreaktoren) mit Rührer, Rückflußkühler und Zulaufgefäßen. Als Lösemittel wurde eine 1:1-Mischung aus Xylol und 1-Methoxipropyl-2-acetat verwendet. Das Lösemittelgemisch wurde vorgelegt, ein Teil wurde zum Lösen des Initiators verwendet. Als Initiator wurde Azobis(isovaleronitril) verwendet. Als Polymerisationsregler wurde 3-Mencaptopropylmethyldimethoxisilan eingesetzt.

Das Lösemittelgemisch wurde auf die angegebene Polymerisationstemperatur aufgeheizt, die Temperatur wurde während der ganzen Polymerisationszeit gehalten. Die angegebene Monomerenmischung (incl. Regler) und Initiatorlösung wurden getrennt zudosiert.

Die Zulaufzeiten betrugen bei der Monomerenmischung (incl. Regler) 3 Stunden, bei der Initiatorlösung 3,5 Stunden, wobei mit den beiden Zuäufen gleichzeitig begonnen wurde; der Zulauf erfolgte gleichmäßig über die angegebene Zeit, nach Ende des Initiatorzulaufs wurde noch 2 Stunden bei der angegebenen Polymerisationstemperatur nachpolymerisiert Die Mengen an Monomeren, Lösemittel etc. sind in T = Gewichtsteilen angegeben.

Tabelle 1

| Beispiel Nr. | 1 |
|---|---|
| Lösemittelvorlage[1)] | 1002 T |
| γ-Methacryloxi<-> | |
| propyltrimethoxisilan | 300 T |
| Hexandioldiacrylat | 200 T |
| Methylmethacrylat | 200 T |
| tert.-Butylacrylat | 100 T |
| n-Butylacrylat | 100 T |
| Cyclohexylmethacrylat | 100 T |
| Regler[2)] | 80 T |
| Initiator[3] | 26 T |
| Lösemittel für Init.[1)] | 104 T |
| Polymerisationstemp. | 110 °C |
| Festkörper | 49 % |
| Visk. (dPa.s) | 2 |
| $\overline{M}_n$[4)] | 3000 |
| $\overline{M}_w$[4)] | 65000 |

1) 1:1 Mischung von Xylol und Methoxipropylacetat
2) 3-Mercaptopropylmethyldimethoxisilan
3) Azobis(isovaleronitril)
4) Die Bestimmung der mittleren Molekulargewichte erfolgte gelpermeationschromatographisch gegen Polystyrol-Standard

2. Herstellung eines Klarlackes

Aus 76,0 Teilen des oben beschriebenen silylgruppenhaltigen Copolymerisats, 4,0 Teilen einer 0,006%igen Lösung eines Polysiloxanpolyethers in Solvesso® 100, 8,0 Teilen Butylglykolacetat, 1,0 Teilen eines handelsüblichen Lichtschutzmittels (Handelsprodukt "Tinuvin 292" der Firma Ciba Geigy), 1,0 Teilen eines weiteren handelsüb lichen Lichtschutzmittels (Handelsprodukt "Tinuvin 1130" der Firma Ciba Geigy), 5,0 Teilen Butanol und 5 Teilen Butylacetat wird ein Klarlack hergestellt, indem die einzelnen Komponenten nacheinander mit einem Dissolver verrührt werden. Anschließend werden 8,0 Teile einer Verdünnung bestehend aus 50 Gew.-% Butylacetat, 10 Gew.-% Benzin mit einem Siedebereich von 135 bis 180 °C, 15 Gew.-% Xylol, 15 Gew.-% Solvent Naphta®, 5 Gew.-% Methoxipropylacetat und 5 Gew.-% Butylglykolacetat zugegeben. Als Katalysatoren werden 3 Teile einer 10 %igen butanolischen Lösung von Dibutylzinndilaurat, 1,5 Teile 4,5-Dihydro-1-[3-(triethoxisilyl)-propyl]-imidazol und 10 Teile einer 1 %igen Lösung von γ-Mercaptopropyltrimethoxisilan in Xylol eingesetzt.

3. Herstellung einer wasserverdünnbaren Basisbeschichtungszusammensetzung

Zur Herstellung einer Polyurethan-Dispersion werden zunächst 570 g eines handelsüblichen aus Caprolacton und einem Glykol hergestellten Polyesters mit einer Hydroxylzahl von 196 bei 100 °C 1 Stunde im Vakuum entwässert. Bei 80 °C werden 524 g 4,4'-Dicyclohexylmethandiisocyanat zugegeben und bei 90 °C so lange gerührt, bis der Isocyanatgehalt 7,52 Gew.-%, bezogen auf die Gesamteinwaage, beträgt. Nach Abkühlen auf 60 °C wird eine Lösung von 67 g

Dimethylolpropionsäure und 50 g Triethylamin in 400 g N-Methylpyrrolidon zugegeben und 1 Stunde bei 90 °C gerührt. Die erhaltene Masse wird unter intensivem Rühren in 1840 g kaltes deionisiertes Wassergegeben. Zu der erhaltenen Dispersion werden unter intensivem Rühren innerhalb von 20 Minuten 86 g einer 15 %-igen Hydrazinlösung zugegeben. Die resultierende, sehr feinteilige Dispersion hat einen Festkörpergehalt von 35 % und eine Auslaufzeit von 27 Sekunden im DIN-Becher 4.

Der verwendete wasserlösliche Polyester wird folgendermaßen hergestellt:

In einem Reaktor, der mit einem Rührer, einem Thermometer und einer Füllkörperkolonne ausgestattet ist werden 832 Gew.-Teile Neopentylglykol eingewogen und zum Schmelzen gebracht Es werden 664 Gew.-Teile Isophthalsäure zugegeben. Unter Rühren wird so aufgeheizt, daß die Kolonnenkopftemperatur 100 °C nicht übersteigt. Es wird bei maximal 220 °C so lange verestert, bis eine Säurezahl von 8,5 erreicht ist. Nach Abkühlen auf 180 °C werden 384 Gew.-Teile Trimellithsäureanhydrid zugegeben und weiterverestert, bis eine Säurezahl von 39 erreicht ist Es wird mit 425 Gew.-Teilen Butanol verdünnt

Die wasserverdünnbare Basisbeschichtungszusammensetzung wird hergestellt, indem 35 Teile Verdickungsmittel (Paste eines Natrium-Magnesium-Silikates mit Schichtstruktur, 3 %ig in Wasser) unter Rühren mit 30 Teilen der oben beschriebenen Polyurethan-Dispersion mit einem Festkörpergehalt von 35 % versetzt werden. Unter weiterem Rühren werden 5 Teile des oben beschriebenen Polyesters (Festkörpergehalt 80 %), 0,5 Teile Dimethylethanolamin, 5 Teile eines handelsüblichen methanolveretherten Melamin-Formaldehyd-Harzes (Festkörpergehalt 70% in Wasser), 5 Teile einer handelsüblichen Aluminium-pigmentpaste (65 %ig in Wasser, durchschnittlicher Teilchendurchmesser 10 µm), 8 Teile Butylglykol und 11,5 Teile entionisiertes Wasser zugegeben. Nachdem 30 Minuten gerührt worden ist, wird mit Wasser eine Viskosität von 14 - 15 s Auslaufzeit im DIN 4-Becher eingestellt

Beispiel 1

Zunächst wurden phosphatierte Stahlbleche (Bonder 132) mit der oben beschriebenen wasserverdünnbaren Basisbeschichtungszusammensetzung beschichtet (Trockenfilmschichtdicke 18 µm). Nach einer kurzen Ablüftzeit von 35 min wurde der oben beschriebene Klarlack appliziert (Trockenfilmschichtdicke 50 µm). Nach einer kurzen Ablüftzeit von 10 min wurde dann die Deckschicht zusammen mit der Basisschicht bei verschiedenen Bedingungen getrocknet. Und zwarwurden einige Überzüge durch Aufbewahrung der Blechewährend einer Zeit von 4 h bei Raumtemperatur, andere durch Lagerung bei 130 °C während 30 min und anschließende Lagerung der Bleche bei Raumtemperatur getrocknet. Danach erfolgte die Prüfung der technischen Eigenschaften der resultierenden Beschichtungen. Die Ergebnisse sind in Tabelle 2 dargestellt.

Außerdem wurde untersucht, nach welcher Zeitdauer der Aufbewahrung der beschichteten Bleche bei Raumtemperaturohne Erwärmung im Anschluß an die Beschichtung die Staubtrockenheit und Klebefreiheit der Beschichtungen gegeben ist. Die Ergebnisse dieser Untersuchungen sind ebenfalls in Tabelle 2 dargestellt.

Vergleichsbeispiel 1

Zum Vergleich wurde der Klarlack wie in der Patentanmeldung mit der internationalen Veröffentlichungsnummer WO88/02010 beschrieben auf einen konventionellen lösemittelhaltigen Basislack appliziert.

Es wurden dabei bekannte, übliche konventionelle Basislacke auf Basis von 15 bis 25 Gew.-% Bindemittel, 0,5 bis 22 Gew.-% pigmenten (incl. Metallic- und Effektpigmenten) sowie 68 bis 82 Gew.-% Lösungsmittel eingesetzt, wobei das Bindemittel eine Mischung aus 20 bis 30 Gew.-% CAB, 35 bis 40 Gew.-% (Butyryl, 0,8 bis 1,8 Gew.-% Hydroxyl, Viskosität 50 - 5000 mPas), 45 bis 60 Gew.-% Polyester, 7 bis 20 Gew.-% Melaminharz und 5 bis 10 Gew.-% Polyethylen- oder copolymerisiertes Polyethylen-Wachs mit einem Schmelzpunkt von 90 bis 120°C und das Lösungsmittel eine Mischung aus 50 bis 65 Gew.-% Butylacetat, 15 bis 30 Gew.-% Xylol, 5 bis 10 Gew.-% Butylglykolacetat und 5 bis 15 Gew.-% Butanol ist und die Summe der Gewichtsanteile der Bindemittelbestandteile und die Summe der Gewichtsanteile der Lösemittelbestandteile jeweils 100 Gew.-% beträgt.

Der Polyester ist auf Basis Phthalsäure, Adipinsäure, Neopentylglykol und Trimethylolpropan aufgebaut und weist eine Säurezahl (fest) von 5 bis 20 mgKOH/g, eine OH-Zahl (fest) von 130 bis 170 mgKOH/g und ein zahlenmittleres Molekulargewicht von 1200 - 2500 auf. Als Melaminharz wird ein isobutylverethertes Melaminformaldehydharz mit einer Viskosität von 200 - 2000 mpas (23°C, 55%ige Lösung) eingesetzt Diese lösemittelhaltigen Basislacke wurden entsprechend einer Trockenfilmschichtdicke von 16 µm appliziert und nach einer kurzen Ablüftzeit von 15 min mit dem oben beschriebenen Klarlack überlackiert (Trockenfilmschichtdicke 45 µm). Nach einer kurzen Ablüftzeit von 20 min wurde dann die Deckschicht zusammen mit der Basisschicht analog zu Beispiel 1 unterverschiedenen Bedingungen getrocknet und die resultierende Beschichtung analog Beispiel 1 geprüft. Die Ergebnisse sind in Tabelle 2 dargestellt.

Tabelle 2

| Eigenschaftsniveau der Beschichtungen | | |
|---|---|---|
| | Beispiel 1 | Vergleichsbeispiel 1 |
| Klebefreiheit nach | < 3 h | < 3 h |
| Staubtrockenheit nach | < 2 h | < 2 h |
| Glanz (20 °) nach 2 Tagen | 83 | 85 |
| DOI[1] nach 2 Tagen | 75 | 77 |
| Erichsen-Tiefung (mm) | 7 | 4 |
| DIN 53156 nach 7 Tagen | | |
| Steinschlag-Best.[2] | | |
| nach 7 Tagen | 4 | 6 |
| Gitterschnitt nach 7 Tagen | Gt 0-1 | Gt 4 |
| Benzintest nach 2 Tagen[3] | 3/3 | 3/3 |

1) Bestimmt gemäß Vorschrift 6/77 im Manual Hunterlab D47R6F Dorigon, Reston Virginia, USA, der Firma Hunter associates Laboratory Inc.
2) Bestimmt nach der VW-Prüfvorschrift 3.14.3 durch Beschuß der beschichteten Stahlbleche mit 2 x 500 g Stahlschrot, Druck 3 bar
3) Mit handelsüblichem Superbenzin getränkte Filzplättchen(∅ 5 cm) werden für 5 min abgedeckt auf dem Film belassen. Anschließend wird die Markierung (3 = keine Markierung; 0 = deutliche Markierung) und die Erweichung des Films ( 3 = keine Erweichung; 0 = deutliche Erweichung) beurteilt.

## Patentansprüche

**1.** Verfahren zur Herstellung eines mehrschichtigen, schützenden und/oder dekorativen Überzuges auf einer Substratoberfläche, bei welchen

1.) eine wäßrige Basislackbeschichtungszusammensetzung aufgebracht wird, die

a) mindestens ein wasserverdünnbares Bindemittel, ausgewählt aus der Gruppe der wasserverdünnbaren Polyester, Polyurethane, Acrylatcopolymerisate, Aminoplaste, Phenoplaste, Emulsionspolymerisate,
b) metallische Pigmente sowie ggf. Farbpigmente und ggf. Füllstoffe,
c) ggf. übliche Hilfs- und Zusatzstoffe sowie
d) bis zu 20 Gew.-% organische Lösungsmittel enthält,

2.) aus der in Stufe (1) aufgebrachten Zusammensetzung ein Polymerfilm auf der Oberfläche gebildet wird,
3.) auf der so erhaltenen Basisschicht ein transparenter Decklack aufgebracht wird, der ein Silylgruppen enthaltenes polymerisat enthält, wobei das Polymerisat erhältlich ist durch Copolymerisation von

p1) 0,1 bis 40 Gew.-% ethylenisch ungesättigte Silanmonomere der allgemeinen Formel (I)

$$\begin{array}{c} R^1 \\ |_{3-n} \\ R^2 - Si - X_n \end{array} \qquad (I)$$

mit

$R^1$ = Alkyl, Aryl, Acyl, Aralkyl mit 1 bis 10 C-Atomen
$R^2$ = organischer Rest mit polymerisierbarer Doppelbindung
X = hydrolisierbare Gruppe
n = 1, 2 oder 3

$p_2$) 5 bis 30 Gew.-%, bevorzugt 8 bis 25 Gew.-%, Monomeren mit mindestens 2 polymerisierbaren ethylenisch ungesättigten Doppelbindungen und
$p_3$) 30 bis 90 Gew.-% ethylenisch ungesättigten Monomeren ohne Gruppen mit aktivem Wasserstoff,

wobei die Summe der Gewichtsanteile der Komponenten $p_1$ bis $p_3$ jeweils 100 Gew.-% beträgt,
4.) die Deckschicht zusammen mit der Basisschicht gehärtet wird.

**2.** Verfahren nach Anspruch 1, dadurch gekennzeichnet, daß eine wasserverdünnbare Basislackbeschichtungszusammensetzung aufgebracht wird, die als wasserverdünnbares Bindemittel ein wasserverdünnberes Polyurethanharz enthält, das eine Säurezahl von 5 bis 70 mg KOH/g, aufweist und herstellbar ist, indem aus

a) Diolen und/oder Polyolen
b) Diisocyanaten und
c) Verbindungen, die zwei gegenüber Isocyanatgruppen reaktive Gruppe enthalten, wobei zumindest ein Teil der als Komponente (c) eingesetzten Verbindungen mindestens eine zur Anionenbildung befähigte Gruppe aufweist, die vor oder nach dem Einbau der Komponente c in das Polyurethanmolekül neutralisiert wird, ein endständige Isocyanatgruppen aufweisendes Zwischenprodukt hergestellt worden ist, dessen freie Isocyanatgruppen anschließend mit einem mindestens drei Hydroxylgruppen enthaltenden Polyol (d) vorzugsweise Triol oder einem Polyamin und/oder Hydrazin, umgesetzt wurden.

**3.** Verfahren nach Anspruch 2, dadurch gekennzeichnet, daß die Basisbeschichtungszusammensetzung als zusätzliche Bindemittelkomponente ein wasserverdünnbares Melaminharz in einem Anteil von 1 bis 80 Gew.-%, bevorzugt 30 bis 70 Gew.-%, bezogen aufden Anteil des wasserverdünnbaren Polyurethanharzes, enthält.

**4.** Verfahren nach Anspruch 3, dadurch gekennzeichnet, daß die Basisbeschichtungszusammensetzung als weitere Bindemittelkomponente ein wasserverdünnbares Polyesterharz und/oder ein wasserverdünnbares Polyacrylatharz enthält, wobei das Gewichtsverhältnis Melaminharz zu Polyesterharz und/oder Polyacrylatharz 2:1 bis 1:4 beträgt und das Gewichtsverhältnis Melaminharz plus Polyester- und/oder Polyacrylatharz zu Polyurethanharz 4:1 bis 1:4, bevorzugt 2:1 bis 1:2, besonders bevorzugt 1,3:1 bis 1:1,3, beträgt.

**5.** Verfahren nach Anspruch 2, dadurch gekennzeichnet, daß die Basisbeschichtungszusammensetzung als zusätzliche Bindemittelkomponente ein blockiertes Polyisocyanat zusammen mit einem wasserverdünnbaren Polyesterharz und/oder einem wasserverdünnbaren Polyacrylatharz enthält und das Gewichtsverhältnis Polyisocyanat plus Polyester- und/oder Polyacrylatharz zu Polyurethanharz 4:1 bis 1:4, bevorzugt 2:1 bis 1:2, beträgt.

**6.** Verfahren nach einem der Ansprüche 1 bis 5, dadurch gekennzeichnet, daß ein transparenter Decklack aufgebracht wird, der ein Silylgruppen enthaltendes Polymerisat enthält, bei dessen Herstellung als Komponente $p_1$ $\gamma$-Methacryloxipropyltrimethoxisilan verwendet wurde.

**7.** Verfahren nach einem der Ansprüche 1 bis 6, dadurch gekennzeichnet, daß ein transparenter Decklack aufgebracht wird, der ein Silylgruppen enthaltendes polymerisat enthält, bei dessen Herstellung als Komponente $p_2$ Monomere

der allgemeinen Formel (II)

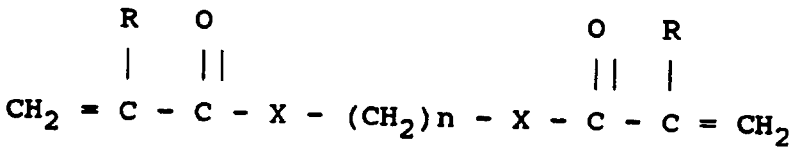

mit

R = H, $CH_3$ oder Alkyl
X = O, NH, S
n = 2 bis 8 oder Diester von Polyethylenglykol und/oder Polypropylenglykol mit einem mittleren Molekulargewicht von weniger als 1500, bevorzugt weniger als 1000, und Acrylsäure und/oder Methacrylsäure eingesetzt werden.

**8.** Verfahren nach einem der Ansprüche 1 bis 7, dadurch gekennzeichnet, daß die Deckschicht zusammen mit der Basisschicht bei Temperaturen von unter 100 °C, bevorzugt von unter 80 °C, gehärtet wird.

**9.** Mit einer Basis- und transparenten Deckschicht beschichteter Gegenstand, dadurch gekennzeichnet, daß er nach einem Verfahren nach einem der Ansprüche 1 bis 8 erhalten wurde.

## Claims

**1.** A process for the preparation of a multilayer protective and/or decorative coating on a substrate surface in which

1.) an aqueous basecoat composition is applied, which composition contains

a) at least one water-dilutable binder selected from the group comprising water-dilutable polyesters, polyurethanes, acrylate copolymers, amino resins, phenolic resins, emulsion polymers,
b) metallic pigments and, if desired, color pigments and, if desired, fillers,
c) if desired, customary auxiliaries and additives and
d) up to 20% by weight of organic solvents,

2.) a polymer film is formed on the surface from the composition applied in step (1),
3.) a transparent topcoat is applied to the base layer thus obtained, which topcoat contains a polymer containing silyl groups, the polymer being obtainable by copolymerization of

p1) 0.1 to 40% by weight of ethylenically unsaturated silane monomers of the general formula (1)

(I)

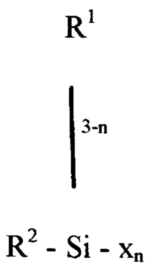

where

$R^1$ is alkyl, aryl, acyl, aralkyl having 1 to 10 carbon atoms

$R^2$ is an organic radical having a polymerizable double bond
X is a hydrolyzable group
n is 1, 2 or 3

p2) 5 to 30% by weight, preferably 8 to 25% by weight, of monomers having at least 2 polymerizable ethylenically unsaturated double bonds and
p3) 30 to 90% by weight of ethylenically unsaturated monomers without groups having active hydrogen,

the sum of the relative weights of components $p_1$ to $p_3$ being in each case 100% by weight,
4.) the top layer is cured together with the base layer.

**2.** The process as claimed in claim 1, wherein a water-dilutable basecoat composition is applied which contains, as water-dilutable binder, a water-dilutable polyurethane resin having an acid number of 5 to 70 mg of KOH/g and being preparable by preparing an intermediate having terminal isocyanate groups from

a) diols and/or polyols
b) diisocyanates and
c) compounds containing two groups which are reactive toward isocyanate groups, at least some of the compounds used as component (c) having at least one group capable of anion formation which is neutralized before or after incorporating component c in the polyurethane molecule, and then reacting the free isocyanate groups of this intermediate with a polyol (d) containing at least three hydroxyl groups, preferably a triol, or a polyamine and/or hydrazine.

**3.** The process as claimed in claim 2, wherein the basecoat composition contains a water-dilutable melamine resin in an amount of 1 to 80% by weight, preferably 30 to 70% by weight, relative to the amount of the water-dilutable polyurethane resin, as additional binder component.

**4.** The process as claimed in claim 3, wherein the basecoat composition contains, as further binder component, a water-dilutable polyester resin and/or a water-dilutable polyacrylate resin, the weight ratio of melamine resin to polyester resin and/or polyacrylate resin being 2:1 to 1:4 and the weight ratio of melamine resin plus polyester and/or polyacrylate resin to polyurethane resin being 4:1 to 1:4, preferably 2:1 to 1:2, particularly preferably 1.3:1 to 1:1.3.

**5.** The process as claimed in claim 2, wherein the basecoat composition contains, as additional binder component, a blocked polyisocyanate together with a water-dilutable polyester resin and/or a water-dilutable polyacrylate resin and the weight ratio of polyisocyanate plus polyester and/or polyacrylate resin to polyurethane redin is 4:1 to 1:4, preferably 2:1 to 1:2.

**6.** The process as claimed in any of claims 1 to 5, wherein a transparent topcoat is applied containing a polymer containing silyl groups, in the preparation of which γ-methacryloxypropyltrimethoxysilane has been used as component $p_1$.

**7.** The process as claimed in any of claims 1 to 6, wherein a transparent topcoat is applied containing a polymer containing silyl groups, in the preparation of which monomers of the general formula (II)

(II)

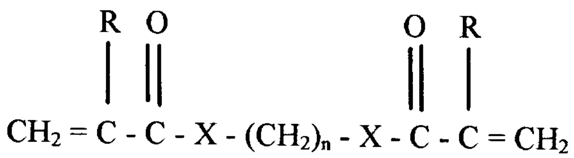

where

R is H, $CH_3$ or alkyl

X is O, NH, S

n is 2 to 8

or diesters of polyethylene glycol and/or polypropylene glycol having an average molecular weight of less than 1500, preferably less than 1000, and acrylic acid and/or methacrylic acid are used as component $p_2$.

8. The process as claimed in any of claims 1 to 7, wherein the top layer is cured together with the base layer at temperatures below 100 °C, preferably below 80 °C.

9. An article coated with a base layer and a transparent top layer, which article has been obtained by the process as claimed in any of claims 1 to 8.

**Revendications**

1. Procédé pour préparer sur la surface d'un subjectile un revêtement multicouche, à effet protecteur et/ou décoratif, dans lequel

1.) on applique une composition de revêtement aqueuse, du type vernis de base, et qui contient

a) au moins un liant diluable à l'eau, choisi parmi l'ensemble comprenant les polyesters, les polyuréthannes, les copolymères acryliques, les aminoplastes, les phéno-plastes et les polymères en émulsion diluables à l'eau,
b) des pigments métalliques et éventuellement des pigments colorés et éventuellement des charges,
c) éventuellement des additifs et adjuvants usuels, et
d) jusqu'à 20 % en poids de solvants organiques,

2.) à partir de la composition appliquée dans l'étape (1), on forme un film de polymère sur la surface,
3.) sur la couche de base ainsi obtenue, on applique un vernis de finition transparent qui contient un polymère contenant des groupes silyle, le polymère pouvant être obtenu par polymérisation
p1) de 0,1 à 40 % en poids de silanes monomères à insaturation éthylénique ayant la formule suivante:

(I)

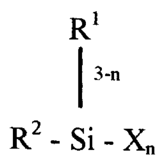

où $R^1$ est un radical alkyle, aryle, acyle ou aralkyle ayant de 1 à 10 atomes de carbone,
$R^2$ est un résidu organique comportant une double liaison polymérisable,
X est un groupe hydrolysable,
n vaut 1, 2 ou 3,
p2) de 5 à 30 % en poids et de préférence de 8 à 25 % en poids de monomères comportant au moins deux doubles liaisons polymérisables à insaturation éthylénique, et
p3) de 30 à 90 % en poids de monomères à insaturation éthylénique ne comportant pas de groupes ayant un hydrogène actif, la somme des pourcentages pondéraux des constituants p1 à p3 étant de 100 % en poids,
4.) on durcit la couche de finition en même temps que la couche de base.

2. Procédé selon la revendication 1, caractérisé en ce qu'on applique une composition de revêtement diluable à l'eau du type vernis de base, qui contient en tant que liant diluable à l'eau une résine de polyuréthane diluable à l'eau, qui a un indice d'acide de 5 à 70 mg KOH/g que l'on peut préparer en préparant, à partir

a) de diols et/ou de polyols
b) de diisocyanates et
c) de composés contenant deux groupes réactifs vis-à-vis des groupes isocyanates, au moins une partie des composés utilisés en tant que constituants (c) comportant au moins un groupe pouvant assurer la formation d'anions, groupe qui, avant ou après incorporation du constituant (c), est neutralisé dans la molécule de polyuréthane, un produit intermédiaire, comportant des groupes isocyanates terminaux, produit intermédiaire dont les groupes isocyanates libres ont été ensuite mis à réagir avec un polyol (d) contenant au moins trois groupes hydroxyles, de préférence un triol, ou avec une polyamine et/ou une hydrazine.

**3.** Procédé selon la revendication 2, caractérisé en ce que la composition de revêtement de base contient, en tant que constituant liant supplémentaire, une résine de mélamine diluable à l'eau, en une quantité de 1 à 80 %, et de préférence de 30 à 70 % en poids par rapport à la part de la résine de polyuréthane diluable à l'eau.

**4.** Procédé selon la revendication 3, caractérisé en ce que la composition de revêtement de base contient en tant qu'autre constituant liant une résine de polyester diluable à l'eau et/ou une résine polyacrylique diluable à l'eau, le rapport pondéral de la résine de mélamine à la résine de polyester et/ou à la résine polyacrylique étant de 2:1 à 1:4, et le rapport pondéral de la somme de la résine de mélamine et de la résine de polyester et/ou acrylique à la résine de polyuréthane étant de 4:1 à 1:4, de préférence de 2:1 à 1:2, et tout particulièrement de 1,3:1 à 1:1,3.

**5.** Procédé selon la revendication 2, caractérisé en ce que la composition de revêtement de base contient en tant que constituant liant supplémentaire un polyisocyanate bloqué en bout, avec une résine de polyester diluable à l'eau et/ou une résine polyacrylique diluable à l'eau, le rapport pondéral de la somme du polyisocyanate et de la résine de polyester et/ou polyacrylique à la résine de polyuréthane étant de 4:1 à 1:4 et de préférence de 2:1 à 1:2.

**6.** Procédé selon l'une des revendications 1 à 5, caractérisé en ce qu'on applique un vernis de finition transparent, qui contient un polymère contenant des groupes silyle, lors de la fabrication duquel on a utilisé comme constituant $p_1$ du γ-méthacryloxypropyltriméthoxysilane.

**7.** Procédé selon l'une des revendications 1 à 6, caractérisé en ce qu'on applique un vernis de finition transparent, lequel contient un polymère contenant des groupes silyles, lors de la fabrication duquel on utilise comme constituant $p_2$ un monomère de formule générale (II)

(II)

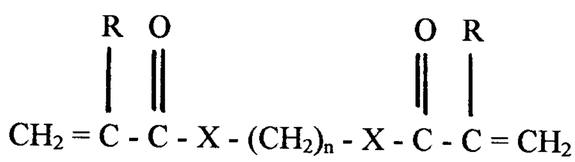

dans laquelle
R est H, $CH_3$ ou un radical alkyle
X est O, NH, ou S
n vaut de 2 à 8
ou des diesters du polyéthylèneglycol et/ou du polypropylèneglycol ayant une masse moléculaire moyenne inférieure à 1500, de préférence inférieure à 1000, et/ou de l'acide acrylique et/ou de l'acide méthacrylique.

**8.** Procédé selon l'une des revendications 1 à 7, caractérisé en ce que la couche de finition, avec la couche de base, est durcie à des températures inférieures à 100 °C, et de préférence inférieures à 80 °C.

**9.** Objet revêtu d'une couche de base et d'une couche de finition transparente, caractérisé en ce qu'il a été obtenu par un procédé selon l'une des revendications 1 à 8.